# EUROPÄISCHE PATENTSCHRIFT

(11) **EP 3 938 755 B1**
(45) Veröffentlichungstag und Bekanntmachung des Hinweises auf die Patenterteilung: **19.02.2025**
(21) Anmeldenummer: 20710910.9
(22) Anmeldetag: 11.03.2020
(51) Int. Cl.: G01M 17/00, G05D 13/00, G05B 11/01, G05B 19/416

(54) **VERFAHREN UND REGELUNGSEINRICHTUNG ZUR REGELUNG EINER DREHZAHL**
METHOD AND CONTROL DEVICE FOR CONTROLLING A ROTATIONAL SPEED
PROCÉDÉ ET DISPOSITIF DE RÉGULATION POUR RÉGULER UNE VITESSE DE ROTATION

(30) Priorität: 11.03.2019 AT 501982019
(43) Veröffentlichungstag der Anmeldung: 19.01.2022
(73) Patentinhaber: AVL List GmbH, 8020 Graz (AT)
(72) Erfinder: OLIP, Horst, 8010 Graz (AT); ABLER, Georg, 5111 Bürmoos (AT); BIER, Maximilian, 64285 Darmstadt (DE)
(74) Vertreter: Patentanwälte Pinter & Weiss OG
(86) Internationale Anmeldenummer: PCT/EP2020/056521
(87) Internationale Veröffentlichungsnummer: WO 2020/182895

(56) Entgegenhaltungen:
- EP-A1- 2 372 312
- EP-A2- 1 447 729
- DE-A1- 10 040 385
- DE-A1- 3 932 214

## Beschreibung

Die Erfindung betrifft ein Verfahren zur Regelung einer Drehzahl einer Belastungsmaschine eines Prüfstands, wobei aus einem Drehzahl-Sollwert eine Drehzahl-Führungsgröße für einen Regler erzeugt wird. Weiters betrifft die Erfindung eine Regelungsanordnung zur Regelung der Drehzahl einer Belastungsmaschine eines Prüfstands.

Bei klassischen Drehzahlsensoren (insbesondere Inkrementalgebern), wie sie üblicherweise bei elektrischen Belastungsmaschinen am Prüfstand verwendet werden, ist der Messbereich um Null Upm und bei exakt Null Upm grundsätzlich nur unzureichend abgedeckt. Unterhalb einer bestimmten Mindestdrehzahl kann dabei die drehzahlabhängige Abweichung zwischen Absolutwert und Inkrementalsignal nicht mehr ohne Weiteres vernachlässigt werden. Das schlecht aufgelöste Drehzahlsignal führt in Folge zu Problemen bei der Regelung. Die geforderte Regelqualität kann nicht erreicht werden. Diese Problematik der DrehzahlRegelung bei kleinen Drehzahlen stellt sich bei automotiven Prüfständen vor allem dann, wenn Versuche aus dem Stillstand heraus oder bei sehr kleinen Drehzahlen durchgeführt werden sollen. Das Problem ist auch von Antriebstrang-Prüfständen bekannt, bei denen die Belastungsmaschine auf Radniveau angreift. Seit der verstärkten Einführung von elektrifizierten Komponenten (z.B. E-Motoren oder Hybrid-Antrieben) stellt sich das Problem zunehmend auch bei Motorprüfständen.

Die gegenständliche Erfindung hat die Aufgabe, die Regelung der Drehzahl einer Maschine hinsichtlich ihrer Performance auch bei Drehzahlen nahe Null oder bei Regelvorgängen aus dem oder in den Stilltand zu verbessern.

Erfindungsgemäß werden diese und weitere Aufgaben durch ein Verfahren nach Anspruch 1 gelöst. Dadurch kann bei niedrigen Drehzahlen der Drehzahl-Sollwert für die Regelung in Abhängigkeit davon, wie die geregelte Maschine mit der Zeit der idealen (Winkel-)Position folgt, angepasst werden. Bei höheren Drehzahlen, beispielsweise wenn der Drehzahlsensor eine ausreichend hohe Auflösung aufweist, schaltet die Regelung auf das herkömmliche Regelverfahren um. Die Verwendung eines Positionssignals (d.h. Winkelsignals) bei niedrigen Umdrehungszahlen hat auch den Vorteil, dass bei einem Drehzahl-Sollwert von Null U/min die Drehzahl durch den Bezug auf den Absolutwert des Winkels nicht wegdriften kann. Die Drehzahl, bei der das Umschalten erfolgt, wird so hoch gewählt, dass die Regelung auch ohne adaptierten Drehzahl-Sollwert bereits ausreichend gut funktioniert. In diesem Bereich ist keine Abweichung des Drehwinkel-Istwerts vom Drehwinkel-Sollwert mehr zu erwarten, sodass beim Umschalten keine sprunghaften Änderungen der Drehzahl-Führungsgröße zu erwarten sind.

In vorteilhafter Weise kann das Umschalten gemäß einer Umschaltkennlinie mit einer vorzugsweise rampenartigen Übergangsphase ausgeführt werden, wobei in der Übergangsphase die Drehzahl-Führungsgröße insbesondere einer Linearkombination von Drehzahl-Sollwert und adaptiertem Drehzahl-Sollwert entspricht. Der dadurch erzielte rampenartige Übergang der Regelung ist aus Gründen der Regelstabilität vorteilhaft, wobei das Auftreten von Drehmomentstößen vermieden wird.

In einer bevorzugten Ausführungsform kann der adaptierte Drehzahl-Sollwert aus einer Abweichung des Drehwinkel-Istwerts von dem Drehwinkel-Sollwert ermittelt werden. Dies lässt sich durch ein einfaches Summierglied in Verbindung mit einer entsprechenden Signalaufbereitung realisieren.

In vorteilhafter Weise kann der Drehwinkel-Sollwert als normierter Wert aus dem Drehzahl-Sollwert ermittelt werden.

Gemäß einer weiteren vorteilhaften Ausführungsform kann der Drehwinkel-Istwert als skalierter und normierter Werte aus einem Drehwinkel-Rohsignal ermittelt werden. Dadurch können der Drehwinkel-Sollwert und der Drehwinkel-Istwert auf einfache Weise miteinander in Beziehung gesetzt werden.

In einer vorteilhaften Ausführungsform kann erfindungsgemäß eine Drehzahl-Rückführgröße der Regelung zwischen dem Allgemein-Drehzahlmesswert und einem Hochauflösungs-Drehzahlmesswert drehzahlabhängig umgeschaltet werden. Durch dieses Merkmal lässt sich die Regelgenauigkeit nochmals erhöhen, da im Bereich geringer Drehzahlen ein hochauflösender Drehzahlmesswert verwendet wird.

In vorteilhafter Weise kann das Umschalten gemäß einer Umschaltkennline mit einer vorzugsweise rampenartigen Übergangsphase ausgeführt werden, wobei in der Übergangsphase die Drehzahl-Rückführgröße insbesondere einer Linearkombination von Allgemein-Drehzahlmesswert und Hochauflösungs-Drehzahlmesswert entspricht. Dies dient wiederum der Regelstabilität und der Vermeidung von Drehmomentstößen.

Die Aufgaben der Erfindung werden weiters durch eine Regelungsanordnung nach Anspruch 8 gelöst. Diese Regelungsanordnung erlaubt eine vorteilhafte Umsetzung des oben offenbarten Verfahrens.

In vorteilhafter Weise kann das Sollwert-Umschaltglied ausgebildet sein, den Umschaltvorgang gemäß einer Umschaltkennlinie mit einer vorzugsweise rampenartigen Übergangsphase auszuführen, in der die Drehzahl-Führungsgröße insbesondere als eine Linearkombination aus dem Drehzahl-Sollwert und dem adaptiertem Drehzahl-Sollwert ermittelt wird.

In einer vorteilhaften Ausgestaltung der Erfindung kann die Regelungsanordnung ein Adaptierglied aufweist, welches den adaptierten Drehzahl-Sollwert aus einer Abweichung des Drehwinkel-Istwerts von einem Drehwinkel-Sollwert ermittelt.

In einer weiteren vorteilhaften Ausführungsform kann die Regelungsanordnung ein Integrierglied aufweisen, welches den Drehwinkel-Sollwert als normierten Wert aus dem Drehzahl-Sollwert ermittelt.

Die Regelungsanordnung kann gemäß einer weiteren vorteilhaften Ausführungsform ein Winkelsignal-Aufbereitungsglied aufweisen, welches den Drehwinkel-Istwert als skalierten und normierten Wert aus einem Drehwinkel-Rohsignal ermittelt.

In vorteilhafter Weise kann die Regelungseinrichtung ein Istwert-Umschaltglied aufweisen, welches eine Drehzahl-Rückführgröße der Regelung zwischen dem Allgemein-Drehzahlmesswert und einem Hochauflösungs-Drehzahlmesswert drehzahlabhängig umschaltet.

In einer weiteren vorteilhaften erfindungsgemäßen Ausgestaltung kann das Istwert-Umschaltglied ausgebildet sein, den Umschaltvorgang gemäß einer Umschaltkennlinie mit einer vorzugsweise rampenartigen Übergangsphase auszuführen, in der die Drehzahl-Rückführgröße insbesondere als eine Linearkombination aus dem Allgemein-Drehzahlmesswert und dem Hochauflösungs-Drehzahlmesswert ermittelt wird.

Die gegenständliche Erfindung wird nachfolgend unter Bezugnahme auf die Figuren 1 bis 2 näher erläutert, die beispielhaft, schematisch und nicht einschränkend vorteilhafte Ausgestaltungen der Erfindung zeigen. Dabei zeigt
Fig.1 eine schematische Darstellung einer Regelungsanordnung gemäß einer ersten Ausführungsform,
Fig. 2 ein Blockschaltbild eines Sollwert-Umschaltglieds der Regelung gemäß einer vorteilhaften Ausführungsform,
Fig. 3 ein Blockschaltbild eines Teils der Regelung in einer detaillierteren Darstellung,
Fig. 4 ein Blockschaltbild eines Istwert-Umschaltglieds gemäß einer weitern Ausgestaltung der erfindungsgemäßen Regelung und
Fig. 5 eine schematische Darstellung einer Regelungsanordnung gemäß einer zweiten Ausführungsform.

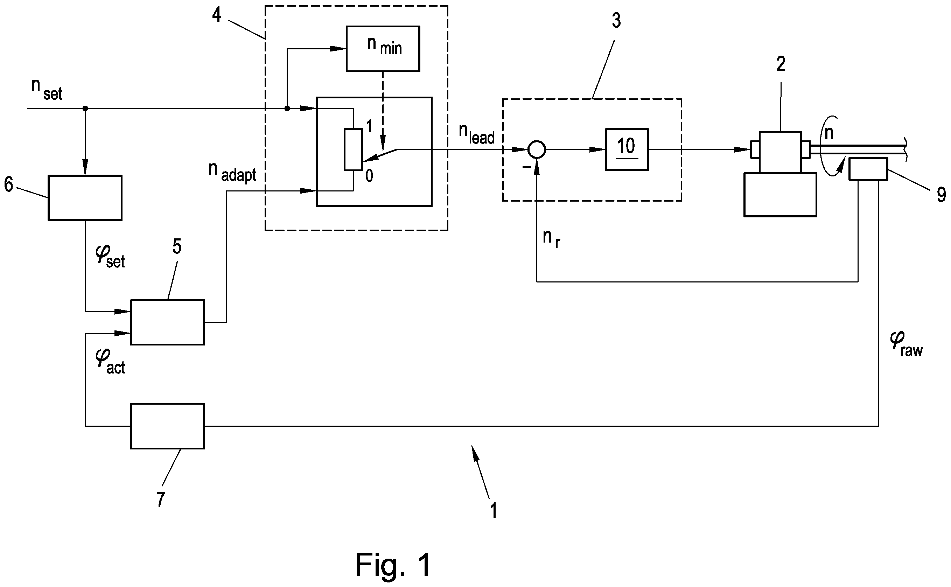

Fig. 1 zeigt die Regelung einer Belastungsmaschine 2 eines Prüfstandes, wobei die Belastungsmaschine 2 über eine Welle mit einem Prüfling (nicht dargestellt) verbunden ist. Die Drehzahl n, mit der die Welle an der Belastungsmaschine rotiert, ist die Regelgröße. Über eine Sensoranordnung 9 wird die Drehzahl n gemessen und als Drehzahl-Rückführgröße nᵣ zu einem Regler 3 zurückgeführt. Im Regler 3 wird die Abweichung der Drehzahl-Rückführgröße nᵣ von einer Drehzahl-Führungsgröße n_{lead} ermittelt, und als Regeldifferenz einem Regelglied 10 zugeführt, welches gemäß einer definierten Regelstrategie eine Stellgröße für die Belastungsmaschine 2 erzeugt.

Während des "normalen" Betriebs, d.h. oberhalb einer gewissen Mindestdrehzahl nₘᵢₙ, entspricht die Drehzahl-Führungsgröße n_{lead} in herkömmlicher Weise einem Drehzahl-Sollwert nₛₑₜ, der beispielsweise von einer Systemsteuerung oder einer Simulation erzeugt wird.

Bei geringen Drehzahlen n, insbesondere beim Beschleunigen aus dem Stillstand und Verzögern in den Stillstand, kommt es bei bekannten Regelungsverfahren für Belastungsmaschinen in Prüfständen zu Einbußen hinsichtlich der Regelqualität. Zur Verbesserung der Regelqualität wird daher erfindungsgemäß mit einem Sollwert-Umschaltglied 4, das dem Regler 3 vorgelagert ist, die Drehzahl-Führungsgröße n_{lead} auf einen adaptierten Drehzahl-Sollwert n_{adap} umgeschaltet, wenn die Drehzahl n unter der Mindestdrehzahl nₘᵢₙ liegt. Im dargestellten Fall erfolgt der Vergleich mit der Mindestdrehzahl nₘᵢₙ anhand des Drehzahl-Sollwerts nₛₑₜ, der Vergleich könnte jedoch beispielsweise auch auf der Drehzahl-Rückführgröße nᵣ erfolgen. Der adaptierte Drehzahl-Sollwert n_{adap} sorgt auch im langsamen Drehzahlbereich für eine hohe und stabile Regelqualität. Die Mindestdrehzahl nₘᵢₙ wird dabei so gewählt, dass die kritischen Bereiche geringer Drehzahlen vollständig umfasst sind, und dass Umschalten in einem möglichst unkritischen Drehzahlbereich erfolgt.

Der adaptierte Drehzahl-Sollwert n_{adap} wird von einem Adaptierglied 5 auf Basis einer Drehwinkelauswertung gebildet, wobei ein von einem Integrierglied 6 aus dem Drehzahl-Sollwert nₛₑₜ ermittelter Drehwinkel-Sollwert ϕₛₑₜ mit einem auf Basis der Sensoranordnung 9 (oder einer entsprechenden anderen Messanordnung) ermittelten Drehwinkel-Istwert ϕ_{act} verglichen wird. Mithilfe dieses adaptierten Drehzahl-Sollwerts n_{adap} wird im niedrigen Drehzahlbereich die Drehzahl-Führungsgröße n_{lead} in Abhängigkeit davon, wie die Belastungsmaschine 2 mit der Zeit ihrer idealen (Winkel-)Position folgt, angepasst. Der Drehwinkel-Istwert ϕ_{act} wird im dargestellten Fall aus einem von der Sensoranordnung 9 gemessenen Drehwinkel-Rohsignal ϕ_{raw} ermittelt, wobei ein Winkelsignal-Aufbereitungsglied 7 den Drehwinkel-Istwert ϕ_{act} in einer zum Drehwinkel-Sollwert ϕₛₑₜ passenden Form aus dem Drehwinkel-Rohsignal ϕ_{raw} erzeugt.

Die Verwendung eines Positionssignals (d.h. Winkelsignals) vermeidet das Problem der bei niedrigen Drehzahlen n zu geringen Auflösung des gemessenen Drehzahlsignals (d.h. dem Signal auf dem die Drehzahl-Rückführungsgröße nᵣ basiert) und hat auch den Vorteil, dass bei einem Drehzahl-Sollwert = 0 U/min die Drehzahl durch den Bezug auf den Absolutwert des Winkels nicht wegdriften kann.

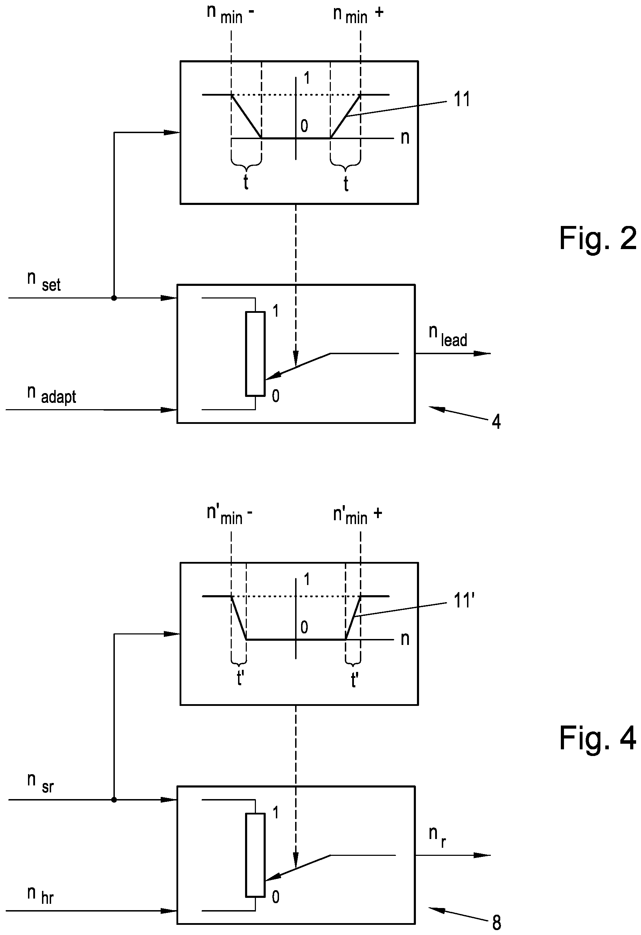

Fig. 2 zeigt eine alternative Ausführungsform des Sollwert-Umschaltglieds 4. Hierbei erfolgt das Umschalten der Drehzahl-Führungsgröße n_{lead} zwischen dem Drehzahl-Sollwerts nₛₑₜ und dem adaptierten Drehzahl-Sollwert n_{adap} gemäß einer Umschaltkennlinie 11, die eine rampenartige Übergangsphase t vorsieht. Auch hierbei ist eine Mindestdrehzahl nₘᵢₙ definiert (sowohl für eine positive Drehrichtung nₘᵢₙ⁺, als auch für eine negative Drehrichtung nₘᵢₙ⁻). Bei Drehzahlen n, deren Absolutwert oberhalb der Mindestdrehzahl nₘᵢₙ liegt, verwendet das Sollwert-Umschaltglied 4 wiederum den Drehzahl-Sollwert nₛₑₜ als Drehzahl-Führungsgröße n_{lead}. Sobald der Absolutwert der Drehzahl die Mindestdrehzahl nₘᵢₙ unterschreitet, erstellt das Sollwert-Umschaltglied 4 innerhalb der Übergangsphase t die Drehzahl-Führungsgröße n_{lead} als Linearkombination von Drehzahl-Sollwert nₛₑₜ und adaptiertem Drehzahl-Sollwert n_{adap}. Wenn der Absolutwert der Drehzahl unterhalb der Übergangsphase liegt, wird der adaptierten Drehzahl-Sollwert n_{adap} als Drehzahl-Führungsgröße n_{lead} verwendet.

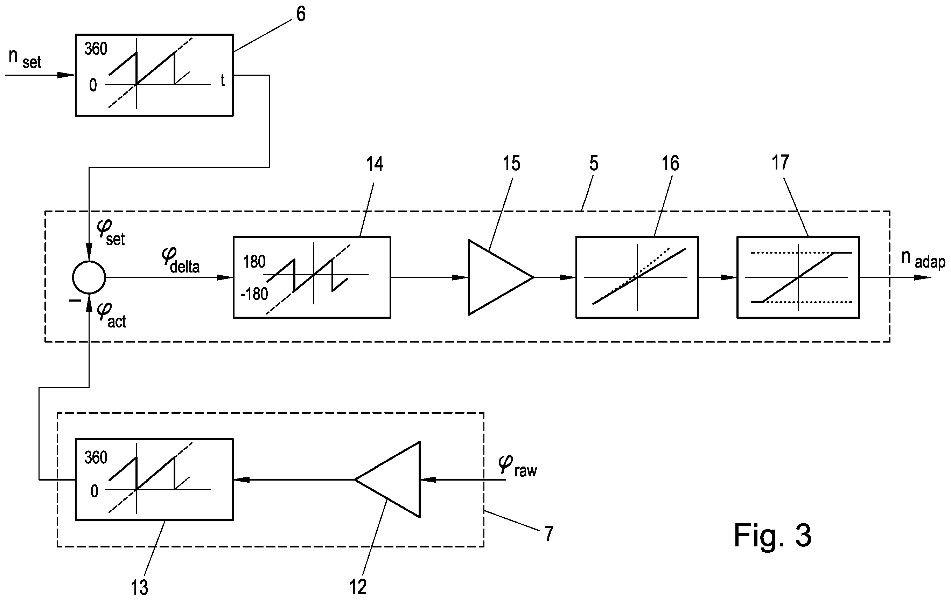

Fig. 3 zeigt eine vorteilhafte Ausführungsform eines Teils der in Fig. 1 skizzierten Regelung, wobei das Integrierglied 6, das Winkelsignal-Aufbereitungsglied 7, und das Adaptierglied 5 detaillierter dargestellt sind. Unter Bezugnahme auf Fig. 3 wird nun anhand dieses konkreten Ausführungsbeispiels die Erzeugung des adaptierten Drehzahl-Sollwerts n_{adap} erläutert.

Das Integrierglied 6 erzeugt den Drehwinkel-Sollwert ϕₛₑₜ aus dem Drehzahl-Sollwert nₛₑₜ als einen integrierten und auf einen Winkelbereich zwischen 0° und 360° normierten Wert. Um den Drehwinkel-Istwert ϕ_{act} mit diesem Wert direkt vergleichen zu können, wird das Drehwinkel-Rohsignal ϕ_{raw} im Winkelsignal-Aufbereitungsglied 7 skaliert (Skalierglied 12) und in einem Normierglied 13 ebenfalls auf einen Winkelbereich zwischen 0° und 360° normiert.

Im Adaptierglied 5 wird aus dem Drehwinkel-Sollwert ϕₛₑₜ und dem Drehwinkel-Istwert ϕ_{act} eine Drehwinkeldifferenz ϕ_{delta} gebildet. Die Drehwinkeldifferenz ϕ_{delta} wird in einem zweiten Normierglied 14 auf einen Winkelbereich zwischen -180° und +180° normiert und in einem Verstärkerglied 15 verstärkt. Um den adaptierten Drehzahl-Sollwert n_{adap} zu erhalten, wird das Signal weiters einer Gradientenbereinigung 16 unterworfen und in einer Wertebegrenzung 17 begrenzt.

Fig. 4 zeigt eine detaillierte Darstellung eines Istwert-Umschaltglieds 8, gemäß einer alternativen Ausführungsform der Erfindung. Das in Fig. 4 dargestellte Istwert-Umschaltglied 8 kann in Ergänzung zu der obenstehend beschriebenen Regelung oder gegebenenfalls auch "alleinstehend", d.h. in Verbindung mit einer herkömmlichen Regelung, verwendet werden. Die Funktionalität des Istwert-Umschaltglieds 8 basiert auf der Idee, als Drehzahl-Rückführgröße nᵣ bei niedrigen Drehzahlen ein hochauflösendes Messsignal zu verwenden, dass die Probleme der normalerweise verwendeten, und von niedrigauflösenden Messystemen stammenden Messsignale vermeidet. Dennoch sollen die Vorteile, die diese niedrigauflösenden Messysteme in höheren Drehzahlbereichen bieten, weiterhin nutzbar sein.

Das Istwert-Umschaltglied 8 weist zwei Eingangswerte auf, die jeweils von einer Messvorrichtung, beispielsweise der Sensoranordnung 9, stammen, und einen Ausgangswert, der als Drehzahl-Rückführgröße nᵣ in der Regelung zurückgeführt wird. Der erste Eingangswert ist ein Allgemein-Drehzahlmesswert nₛᵣ, der beispielsweise von einer herkömmlichen Drehzahl-Messvorrichtung, etwa eines Encoders, stammt. Der Allgemein-Drehzahlmesswert nₛᵣ kann beispielsweise von einem Encoder mit einer Strichzahl von 512 und der Erfassungsart "1-Flanken-Auswertung" stammen. Bei geringen Drehzahlen werden die zeitlichen Abstände zwischen den einzelnen Messpunkten naturgemäß immer größer und können hinsichtlich der Regelqualität schließlich zu Problemen führen. Beispielsweise erzeugt ein solcher Encoder bei einer Drehzahl von 1 U/min (dies entspricht einem Winkel, der mit 6°/s zu- bzw. abnimmt) nur mehr weniger als 9 Impulse pro Sekunde. Wenn der Absolutwert der Drehzahl unterhalb einer Mindestdrehzahl n'ₘᵢₙ liegt, schaltet das Istwert-Umschaltglied 8 daher von dem Allgemein-Drehzahlmesswert nₛᵣ auf einen Hochauflösungs-Drehzahlmesswert nₕᵣ um, der von einem hochauflösenden Messsensor stammt. Dies ist der zweite Eingangswert des Istwert-Umschaltglieds 8.

Der Hochauflösungs-Drehzahlmesswert nₕᵣ kann beispielsweise von Drehzahlmesssystemen erhalten werden, die bereits bei einer Drehzahl von 0 U/min ein hochauflösendes Signal bereitstellen, beispielsweise ein Signal mit einer Frequenz von 100 kHz oder mehr. Zu Beispielen solcher hochauflösender Drehzahlmesssysteme zählen etwa ein Drehgeber HMCR16 in Verbindung mit einem Signalsplitter HEAG-158 oder HMCP 16A, die jeweils von der Firma Baumer-Hübner angeboten werden. Solche Sensoren haben zwar den Vorteil, dass sie auch bei sehr geringen Drehzahlen einen korrekten Messerwert erstellen, oberhalb einer gewissen Maximaldrehzahl sind sie jedoch nicht mehr verwendbar, da die Werte ungenau werden. Das Umschalten zwischen dem Hochauflösungs-Drehzahlmesswert nₕᵣ und dem Allgemein-Drehzahlmesswert nₛᵣ erfolgt in einem Drehzahlbereich, in dem sich die zuverlässigen Arbeitsbereiche beider Sensoren überschneiden, sodass beim Umschalten an der Mindestdrehzahl n'ₘᵢₙ beide Werte, d.h. der Allgemein-Drehzahlmesswert nₛᵣ und der Hochauflösungs-Drehzahlmesswert nₕᵣ übereinstimmen. Dadurch werden beim Umschalten Wertsprünge der Drehzahl-Rückführungsgröße nᵣ vermieden. Zusätzlich kann, wie bereits im Zusammenhang mit dem Sollwert-Umschaltglied 4 beschrieben wurde, der Umschaltvorgang mit einer rampenartigen Übergangsphase t' erfolgen, in der der Wert für die Drehzahl-Rückführungsgröße nᵣ als Linearkombination aus Hochauflösungs-Drehzahlmesswert nₕᵣ und Allgemein-Drehzahlmesswert nₛᵣ erstellt wird.

Die vom Istwert-Umschaltglied 8 verwendete Mindestdrehzahl n'ₘᵢₙ kann mit der Mindestdrehzahl nₘᵢₙ übereinstimmen, die vom Sollwert-Umschaltglied 4 verwendet wird (wenn diese beiden Komponenten in einer Regelung gemeinsam verwendet werden), die Werte können sich jedoch auch unterscheiden. Auch wird in der Darstellung der Figuren für die positive Mindestdrehzahl nₘᵢₙ⁺ bzw. n'ₘᵢₙ⁺ und die negative Mindestdrehzahl nₘᵢₙ⁻ bzw. n'ₘᵢₙ⁻ jeweils derselbe Absolutwert verwendet. Dies ist jedoch keine zwingende Voraussetzung und auch diese Werte können sich voneinander unterscheiden. Die in den Figuren dargestellten rampenartigen Übergänge stellen aufgrund der einfachen Realisierungsmöglichkeiten eine bevorzugte Ausführungsform dar, es ist jedoch klar, dass auch andere Arten von Übergängen bzw. Umschaltkennlinien verwendet werden können, etwa zur Realisierung einer stufenförmigen Umschaltung oder einer kurvenförmige Umschaltung ohne Unstetigkeitsstellen, wenn dies vorteilhaft ist.

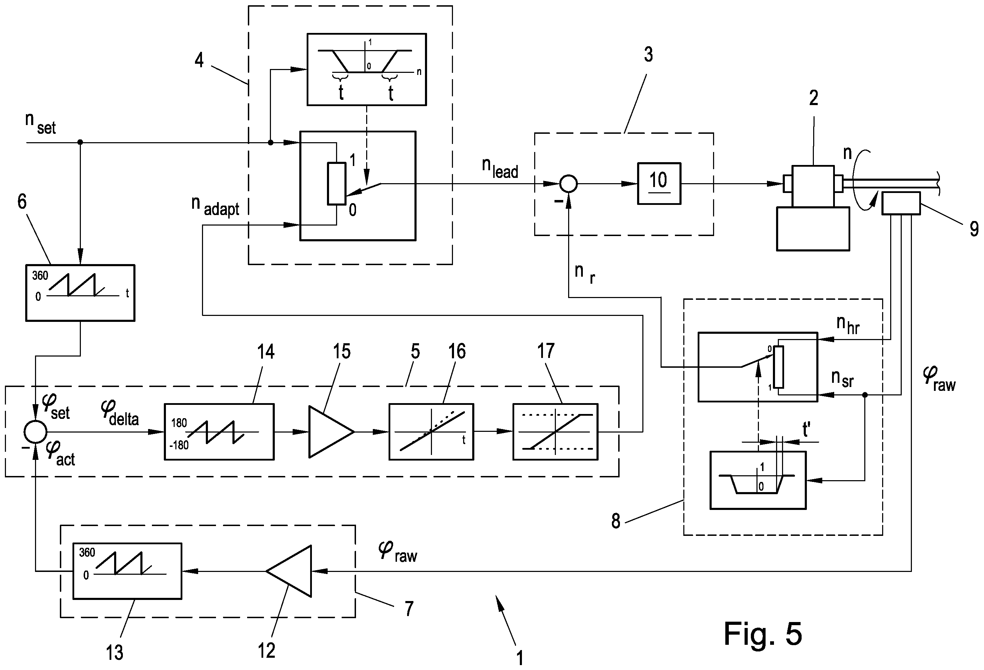

Fig. 5 zeigt eine Regelungsanordnung 1, in welcher alle oben beschriebenen Varianten gemeinsam umgesetzt sind. Die Sensoranordnung 9 umfasst dabei mehrere Sensoren und erzeugt einen Allgemein-Drehzahlmesswert nₛᵣ, einen Hochauflösungs-Drehzahlmesswert nₕᵣ und ein Drehwinkel-Rohsignal ϕ_{raw}, um diese Werte dem Istwert-Umschaltglied 8 bzw. dem Winkelsignal-Aufbereitungsglied 7 bereitzustellen.
Variablen:
   Drehzahl n
   Drehzahl-Sollwert nₛₑₜ
   Drehzahl-Führungsgröße n_{lead}
   adaptierter Drehzahl-Sollwert n_{adap}
   Drehzahl-Rückführgröße nᵣ
   Allgemein-Drehzahlmesswert nₛᵣ
   Hochauflösungs-Drehzahlmesswert nₕᵣ
   Mindestdrehzahl nₘᵢₙ
   Drehwinkel-Istwert ϕ_{act}
   Drehwinkel-Sollwert ϕₛₑₜ
   Drehwinkel-Rohsignal ϕ_{raw}
   Drehwinkeldifferenz ϕ_{delta}
Bezugszeichen:
   Regelungsanordnung 1
   Belastungsmaschine 2
   Regler 3
   Sollwert-Umschaltglied 4
   Adaptierglied 5
   Integrierglied 6
   Winkelsignal-Aufbereitungsglied 7
   Istwert-Umschaltglied 8
   Sensoranordnung 9
   Regelglied 10
   Umschaltkennline 11, 11'
   Skalierglied 12
   Normierglied 13
   zweites Normierglied 14
   Verstärkerglied 15
   Gradientenbereinigung 16
   Wertebegrenzung 17
   Übergangsphase t, t'

## Patentansprüche

1. Verfahren zur Regelung einer Drehzahl (n) einer Belastungsmaschine (2) eines Prüfstands, wobei die Belastungsmaschine (2) über eine Welle mit einem Prüfling verbunden ist, wobei aus einem Drehzahl-Sollwert (nₛₑₜ) eine Drehzahl-Führungsgröße (n_{lead}) für einen Regler (3) erzeugt wird, **dadurch gekennzeichnet, dass** unter Berücksichtigung eines Drehwinkel-Istwerts (ϕ_{act}) und eines Drehwinkel-Sollwerts (ϕₛₑₜ), wobei der Drehwinkel-Sollwert (ϕₛₑₜ) als integrierter Wert aus dem Drehzahl-Sollwert (nₛₑₜ) ermittelt wird, ein adaptierter Drehzahl-Sollwert (n_{adap}) ermittelt wird, wobei die Drehzahl-Führungsgröße (n_{lead}) zwischen dem Drehzahl-Sollwert (nₛₑₜ) und dem adaptierten Drehzahl-Sollwert (n_{adap}) drehzahlabhängig umgeschaltet wird.

2. Verfahren nach Anspruch 1, **dadurch gekennzeichnet, dass** das Umschalten gemäß einer Umschaltkennlinie (11) mit einer vorzugsweise rampenartigen Übergangsphase (t) ausgeführt wird, wobei in der Übergangsphase (t) die Drehzahl-Führungsgröße (n_{lead}) insbesondere einer Linearkombination von Drehzahl-Sollwert (nₛₑₜ) und adaptiertem Drehzahl-Sollwert (n_{adap}) entspricht.

3. Verfahren nach Anspruch 1 oder 2, **dadurch gekennzeichnet, dass** der adaptierte Drehzahl-Sollwert (n_{adap}) aus einer Abweichung des Drehwinkel-Istwerts (ϕ_{act}) von dem Drehwinkel-Sollwert (ϕₛₑₜ) ermittelt wird.

4. Verfahren nach einem der Ansprüche 1 bis 2, **dadurch gekennzeichnet, dass** der Drehwinkel-Sollwert (ϕₛₑₜ) als normierter Wert aus dem Drehzahl-Sollwert (nₛₑₜ) ermittelt wird.

5. Verfahren nach einem der Ansprüche 1 bis 4, **dadurch gekennzeichnet, dass** der Drehwinkel-Istwert (ϕ_{act}) als skalierter und normierter Werte aus einem Drehwinkel-Rohsignal (ϕ_{raw}) ermittelt wird.

6. Verfahren nach einem der Ansprüche 1 bis 5, **dadurch gekennzeichnet, dass** eine Drehzahl-Rückführgröße (nᵣ) der Regelung zwischen dem Allgemein-Drehzahlmesswert (nₛᵣ) und einem Hochauflösungs-Drehzahlmesswert (nₕᵣ) drehzahlabhängig umgeschaltet wird.

7. Verfahren nach Anspruch 6, **dadurch gekennzeichnet, dass** das Umschalten gemäß einer Umschaltkennlinie (11') mit einer vorzugsweise rampenartigen Übergangsphase (t') ausgeführt wird, wobei in der Übergangsphase (t') die Drehzahl-Rückführgröße (nᵣ) insbesondere einer Linearkombination von Allgemein-Drehzahlmesswert (nₛᵣ) und Hochauflösungs-Drehzahlmesswert (nₕᵣ) entspricht.

8. Regelungsanordnung (1) zur Regelung der Drehzahl (n) einer Belastungsmaschine (2) eines Prüfstands, wobei die Belastungsmaschine (2) über eine Welle mit einem Prüfling verbunden ist, **dadurch gekennzeichnet, dass** die Regelungsanordnung (1) ein Integrierglied (6), welches aus einem Drehzahl-Sollwert (nₛₑₜ) einen Drehwinkel-Sollwert (ϕₛₑₜ) ermittelt, ein Adaptierglied (5), welches unter Berücksichtigung eines Drehwinkel-Istwerts (ϕ_{act}) und des Drehwinkel-Sollwerts (ϕₛₑₜ) einen adaptierten Drehzahl-Sollwert (n_{adap}) ermittelt, und ein Sollwert-Umschaltglied (4), welches eine Drehzahl-Führungsgröße (n_{lead}) zwischen dem Drehzahl-Sollwert (nₛₑₜ) und dem adaptierten Drehzahl-Sollwert (n_{adap}) drehzahlabhängig umschaltet, aufweist.

9. Regelungsanordnung (1) nach Anspruch 8, **dadurch gekennzeichnet, dass** das Sollwert-Umschaltglied (4) ausgebildet ist, den Umschaltvorgang gemäß einer Umschaltkennlinie 11 mit einer vorzugsweise rampenartigen Übergangsphase (t) auszuführen, in der die Drehzahl-Führungsgröße (n_{lead}) insbesondere als eine Linearkombination aus dem Drehzahl-Sollwert (nₛₑₜ) und dem adaptiertem Drehzahl-Sollwert (n_{adap}) ermittelt wird.

10. Regelungsanordnung (1) nach einem der Ansprüche 8 oder 9, **dadurch gekennzeichnet, dass** die Regelungsanordnung (1) ein Adaptierglied (5) aufweist, welches den adaptierten Drehzahl-Sollwert (n_{adap}) aus einer Abweichung des Drehwinkel-Istwerts (ϕ_{act}) von einem Drehwinkel-Sollwert (ϕₛₑₜ) ermittelt.

11. Regelungsanordnung (1) nach einem der Ansprüche 8 bis 10, **dadurch gekennzeichnet, dass** die Regelungsanordnung (1) ein Integrierglied (6) aufweist, welches den Drehwinkel-Sollwert (ϕₛₑₜ) als integrierten und normierten Wert aus dem Drehzahl-Sollwert (nₛₑₜ) ermittelt.

12. Regelungsanordnung (1) nach einem der Ansprüche 8 bis 11, **dadurch gekennzeichnet, dass** die Regelungsanordnung (1) ein Winkelsignal-Aufbereitungsglied (7) aufweist, welches den Drehwinkel-Istwert (ϕ_{act}) als skalierten und normierten Wert aus einem Drehwinkel-Rohsignal (ϕ_{raw}) ermittelt.

13. Regelungsanordnung (1) nach einem der Ansprüche 8 bis 12, **dadurch gekennzeichnet, dass** die Regelungseinrichtung (1) ein Istwert-Umschaltglied (8) aufweist, welches eine Drehzahl-Rückführgröße (nᵣ) der Regelung zwischen dem Allgemein-Drehzahlmesswert (nₛᵣ) und einem Hochauflösungs-Drehzahlmesswert (nₕᵣ) drehzahlabhängig umschaltet.

14. Regelungsanordnung nach Anspruch 13, **dadurch gekennzeichnet, dass** das Istwert-Umschaltglied (8) ausgebildet ist, den Umschaltvorgang gemäß einer Umschaltkennlinie (11') mit einer vorzugsweise rampenartigen Übergangsphase (t') auszuführen, in der die Drehzahl-Rückführgröße (nᵣ) insbesondere als eine Linearkombination aus dem Allgemein-Drehzahlmesswert (nₛᵣ) und dem Hochauflösungs-Drehzahlmesswert (nₕᵣ) ermittelt wird.

## Claims

1. Method for controlling a rotational speed (n) of a load machine (2) on a test bench, the load machine (2) being connected to a test object via a shaft, wherein a rotational speed reference variable (n_{lead}) for a controller (3) is generated from a rotational speed setpoint value (nₛₑₜ), **characterized in that** an adapted rotational speed setpoint value (n_{adapt}) is determined taking into consideration a rotation angle actual value (ϕ_{act}) and a rotation angle setpoint value (ϕₛₑₜ), the rotation angle setpoint value (ϕₛₑₜ) being determined as an integrated value from the rotational speed setpoint value (nₛₑₜ), wherein the rotational speed reference variable (n_{lead}) is switched between the rotational speed setpoint value (nₛₑₜ) and the adapted rotational speed setpoint value (n_{adapt}) as a function of the rotational speed.

2. Method according to claim 1, **characterized in that** the switching is carried out according to a switching characteristic curve (11) having a preferably ramp-like transition phase (t), the speed reference variable (n_{lead}) in particular corresponding to a linear combination of the rotational speed setpoint value (nₛₑₜ) and the adapted rotational speed setpoint value (n_{adapt}) in the transition phase (t).

3. Method according to either claim 1 or claim 2, **characterized in that** the adapted rotational speed setpoint value (n_{adapt}) is determined from a deviation of the rotation angle actual value (ϕ_{act}) from the rotation angle setpoint value (ϕₛₑₜ).

4. Method according to any of claims 1 to 2, **characterized in that** the rotation angle setpoint value (ϕₛₑₜ) is determined as a normalized value from the rotational speed setpoint value (nₛₑₜ).

5. Method according to any of claims 1 to 4, **characterized in that** the rotation angle actual value (ϕ_{act}) is determined a as scaled and normalized value from a rotation angle raw signal (ϕ_{raw}).

6. Method according to any of claims 1 to 5, **characterized in that** a rotational speed feedback variable (nᵣ) of the control system is switched between a general rotational speed measurement value (nₛᵣ) and a high-resolution rotational speed measurement value (nₕᵣ) as a function of the rotational speed.

7. Method according to claim 6, **characterized in that** the switching is carried out according to a switching characteristic curve (11') having a preferably ramp-like transition phase (t'), the rotational speed feedback variable (nᵣ) in particular corresponding to a linear combination of the general rotational speed measurement value (nₛᵣ) and the high-resolution rotational speed measurement value (nₕᵣ) in the transition phase (t').

8. Control arrangement (1) for controlling the rotational speed (n) of a load machine (2) on a test bench, the load machine (2) being connected to a test object via a shaft, **characterized in that** the control arrangement (1) has an integrating element (6) which determines a rotation angle setpoint value (ϕₛₑₜ) from a rotational speed setpoint value (nₛₑₜ), an adapting element (5) which, taking into consideration a rotation angle actual value (ϕ_{act}) and the rotation angle setpoint value (ϕₛₑₜ), determines an adapted rotational speed setpoint value (n_{adapt}), and a setpoint value switching element (4) which switches a rotational speed reference variable (n_{lead}) between the rotational speed setpoint value (nₛₑₜ) and the adapted rotational speed setpoint value (n_{adapt}) as a function of the rotational speed.

9. Control arrangement (1) according to claim 8, **characterized in that** the setpoint value switching element (4) is designed to carry out the switching process according to a switching characteristic curve 11 having a preferably ramp-like transition phase (t), in which the rotational speed reference variable (n_{lead}) is in particular determined as a linear combination of the rotational speed setpoint value (nₛₑₜ) and the adapted rotational speed setpoint value (n_{adapt}).

10. Control arrangement (1) according to either claim 8 or claim 9, **characterized in that** the control arrangement (1) has an adapting element (5) which determines the adapted rotational speed setpoint value (n_{adapt}) from a deviation of the rotation angle actual value (ϕ_{act}) from a rotation angle setpoint value (ϕₛₑₜ).

11. Control arrangement (1) according to any of claims 8 to 10, **characterized in that** the control arrangement (1) has an integrating element (6) which determines the rotation angle setpoint value (ϕₛₑₜ) as an integrated and normalized value from the rotational speed setpoint value (nₛₑₜ).

12. Control arrangement (1) according to any of claims 8 to 11, **characterized in that** the control arrangement (1) has an angle signal processing element (7) which determines the rotation angle actual value (ϕ_{act}) as a scaled and normalized value from a rotation angle raw signal (ϕ_{raw}).

13. Control arrangement (1) according to any of claims 8 to 12, **characterized in that** the control arrangement (1) has an actual value switching element (8) which switches a rotational speed feedback variable (nᵣ) of the control system between a general rotational speed measurement value (nₛᵣ) and a high-resolution rotational speed measurement value (nₕᵣ) as a function of the rotational speed.

14. Control arrangement according to claim 13, **characterized in that** the actual value switching element (8) is designed to carry out the switching process according to a switching characteristic curve (11') having a preferably ramp-like transition phase (t'), in which the rotational speed feedback variable (nᵣ) is in particular determined as a linear combination of the general rotational speed measurement value (nₛᵣ) and the high-resolution rotational speed measurement value (nₕᵣ).

## Revendications

1. Procédé permettant la régulation d'une vitesse de rotation (n) d'une machine d'application de charge (2) d'un banc d'essai, dans lequel la machine d'application de charge (2) est reliée à un échantillon d'essai par l'intermédiaire d'un arbre, dans lequel une grandeur de référence de vitesse de rotation (n_{lead}) pour un régulateur (3) est produite à partir d'une valeur de consigne de vitesse de rotation (nₛₑₜ), **caractérisé en ce qu'**une valeur réelle d'angle de rotation (ϕ_{act}) et une valeur de consigne d'angle de rotation (ϕₛₑₜ) sont prises en compte, dans lequel la valeur de consigne d'angle de rotation (ϕₛₑₜ) est déterminée comme valeur intégrée à partir de la valeur de consigne de vitesse de rotation (nₛₑₜ), une valeur de consigne de vitesse de rotation adaptée (n_{adap}) est déterminée, dans lequel la grandeur de référence de vitesse de rotation (n_{lead}) commute entre la valeur de consigne de vitesse de rotation (nₛₑₜ) et la valeur de consigne de vitesse de rotation adaptée (n_{adap}) en fonction de la vitesse de rotation.

2. Procédé selon la revendication 1, **caractérisé en ce que** la commutation est exécutée selon une caractéristique de commutation (11) comportant une phase de transition (t) de préférence en forme de rampe, dans lequel la grandeur de référence de vitesse de rotation (n_{lead}) correspond en particulier, dans la phase de transition (t), à une combinaison linéaire de la valeur de consigne de vitesse de rotation (nₛₑₜ) et de la valeur de consigne de vitesse de rotation adaptée (n_{adap}).

3. Procédé selon la revendication 1 ou 2, **caractérisé en ce que** la valeur de consigne de vitesse de rotation adaptée (n_{adap}) est déterminée à partir d'un écart entre la valeur réelle d'angle de rotation (ϕ_{act}) et la valeur de consigne d'angle de rotation (ϕₛₑₜ).

4. Procédé selon l'une des revendications 1 à 2, **caractérisé en ce que** la valeur de consigne d'angle de rotation (ϕₛₑₜ) est déterminée comme une valeur normalisée à partir de la valeur de consigne de vitesse de rotation (nₛₑₜ).

5. Procédé selon l'une des revendications 1 à 4, **caractérisé en ce que** la valeur réelle d'angle de rotation (ϕ_{act}) est déterminée comme valeurs mises à l'échelle et normalisées à partir d'un signal brut d'angle de rotation (ϕ_{raw}).

6. Procédé selon l'une des revendications 1 à 5, **caractérisé en ce qu'**une grandeur de rétroaction de vitesse de rotation (nᵣ) de la régulation est commutée entre la valeur de mesure de vitesse de rotation générale (nₛᵣ) et une valeur de mesure de vitesse de rotation à haute résolution (nₕᵣ) en fonction de la vitesse de rotation.

7. Procédé selon la revendication 6, **caractérisé en ce que** la commutation est exécutée selon une caractéristique de commutation (11') comportant une phase de transition (t') de préférence en forme de rampe, dans lequel la grandeur de rétroaction de vitesse de rotation (nᵣ) correspond en particulier, dans la phase de transition (t'), à une combinaison linéaire de la valeur de mesure de vitesse de rotation générale (nₛᵣ) et de la valeur de mesure de vitesse de rotation à haute résolution (nₕᵣ).

8. Système de régulation (1) permettant la régulation de la vitesse de rotation (n) d'une machine d'application de charge (2) d'un banc d'essai, dans lequel la machine d'application de charge (2) est reliée à un échantillon d'essai par l'intermédiaire d'un arbre, **caractérisé en ce que** le système de régulation (1) présente un élément d'intégration (6) qui détermine une valeur de consigne d'angle de rotation (ϕₛₑₜ) à partir d'une valeur de consigne de vitesse de rotation (nₛₑₜ), un élément d'adaptation (5) qui détermine une valeur de consigne de vitesse de rotation adaptée (n_{adap}) en prenant en compte d'une valeur réelle d'angle de rotation (ϕ_{act}) et de la valeur de consigne d'angle de rotation (ϕₛₑₜ), et un élément de commutation de valeur de consigne (4) qui commute une grandeur de référence de vitesse de rotation (n_{lead}) entre la valeur de consigne de vitesse de rotation (nₛₑₜ) et la valeur de consigne de vitesse de rotation adaptée (n_{adap}) en fonction de la vitesse de rotation.

9. Système de régulation (1) selon la revendication 8, **caractérisé en ce que** l'élément de commutation de valeur de consigne (4) est configuré pour exécuter le processus de commutation selon une caractéristique de commutation (11) comportant une phase de transition (t) de préférence en forme de rampe dans laquelle la grandeur de référence de vitesse de rotation (n_{lead}) est déterminée en particulier comme combinaison linéaire à partir de la valeur de consigne de vitesse de rotation (nₛₑₜ) et de la valeur de consigne de vitesse de rotation adaptée (n_{adap}).

10. Système de régulation (1) selon l'une des revendications 8 ou 9, **caractérisé en ce que** le système de régulation (1) présente un élément d'adaptation (5) qui détermine la valeur de consigne de vitesse de rotation adaptée (n_{adap}) à partir d'un écart entre la valeur réelle d'angle de rotation (ϕ_{act}) et une valeur de consigne d'angle de rotation (ϕₛₑₜ).

11. Système de régulation (1) selon l'une des revendications 8 à 10, **caractérisé en ce que** le système de régulation (1) présente un élément d'intégration (6) qui détermine la valeur de consigne d'angle de rotation (ϕₛₑₜ) comme valeur intégrée et normalisée à partir de la valeur de consigne de vitesse de rotation (nₛₑₜ).

12. Système de régulation (1) selon l'une des revendications 8 à 11, **caractérisé en ce que** le système de régulation (1) présente un élément de préparation de signal angulaire (7) qui détermine la valeur réelle d'angle de rotation (ϕ_{act}) comme valeur mise à l'échelle et normalisée à partir d'un signal brut d'angle de rotation (ϕ_{raw}).

13. Système de régulation (1) selon l'une des revendications 8 à 12, **caractérisé en ce que** le dispositif de régulation (1) présente un élément de commutation de valeur réelle (8) qui commute une grandeur de rétroaction de vitesse de rotation (nᵣ) de la régulation entre la valeur de mesure de vitesse de rotation générale (nₛᵣ) et une valeur de mesure de vitesse de rotation à haute résolution (nₕᵣ) en fonction de la vitesse de rotation.

14. Système de régulation selon la revendication 13, **caractérisé en ce que** l'élément de commutation de valeur réelle (8) est configuré pour exécuter le processus de commutation selon une caractéristique de commutation (11') comportant une phase de transition (t') de préférence en forme de rampe dans laquelle la grandeur de rétroaction de vitesse de rotation (nᵣ) est déterminée en particulier comme combinaison linéaire à partir de la valeur de mesure de vitesse de rotation générale (nₛᵣ) et de la valeur de mesure de vitesse de rotation à haute résolution (nₕᵣ).
